# EUROPEAN PATENT APPLICATION

(11) **EP 4 401 296 A1**
(43) Date of publication of application: **17.07.2024**
(21) Application number: 23151145.2
(22) Date of filing: 11.01.2023
(51) Int. Cl.: H02M 5/458, H02M 7/483, H02M 7/487, H05B 7/20

(54) **HYBRID MODULAR MULTILEVEL RECTIFIER (HMMR) FOR HIGHLY DYNAMIC LOAD APPLICATIONS**

(71) Applicant: GE Energy Power Conversion Technology Ltd, Rugby, Warwickshire CV21 1BD (GB)
(72) Inventor: ZHOU, Zhi, 123091027 Niskayuna (US); BASIC, Duro, 91140 VILLEBON SUR YVETTE (FR)
(74) Representative: Casalonga

(57) **Abstract**

An AC-DC-AC converter for delivering power to a load from a power source is presented. The AC-DC-AC converter comprises a front-end converter (10), a load-end converter (11), and a DC link (4), the front-end converter (10) being a hybrid modular multilevel rectifier, the load-end converter (11) being either a modular multilevel converter or a hybrid modular multilevel converter.

## Description

The invention relates to modular multilevel converters and more precisely, to such modular multilevel converters powering up an electric arc furnace.

### BACKGROUND

High temperature furnaces are indispensable for refining ores, recycling scrap metal and for metalworking in general, reaching temperatures around 1800°C for 1 ton to 400 tons of material. Such furnaces are generally heated with coal, oil or gas. In an effort to replace the hydrocarbon-fuel fired furnaces, electric furnaces and in particular, electric three-phase arc furnaces ("EAF") have been developed. Those electric furnaces comprise graphite electrodes generating electric arcs through the material loaded in the furnace, heating it through the Joule effect.

In the conventional AC EAF supply systems, the EAF current is controlled by a combination of tap positions of the EAF supply stepdown transformer and series current limiting reactors combined by relatively slow control of the electrodes positions. Due to instability of arc voltages especially during early phases of melting of scrap material, the arcs are often interrupted, or electrode short circuits are created causing short circuit currents in excess of typically 2 times of a nominal current. Thus, the conventional EAFs are sources of strong disturbances to the power supply systems which are hard to mitigate. Large fluctuations of reactive and active power demands are a major source of voltage flicker and inherent non-linearity of arc voltages is a source of distortion in the supply currents (imbalance, harmonics and inter-harmonics). The traditional approach to mitigate power system disturbances caused by EAF and to improve power quality ("PQ") is to use shunt compensation like shunt passive harmonic filters or capacitors, static VAR compensators ("SVC") and/or static synchronous compensators ("STATCOMs") to compensate for the non-active current components produced by EAFs.

However, particularly in cases when strength of the power supply (short circuit power capacity) relative to the EAF power rating is low, the curative shunt compensation can't provide sufficient improvements of the EAF generated PQ issues, in particular required reduction of the voltage flicker to meet the standard limits.

New power converters are therefore required which can be inserted between the power supply and EAF and used to directly control the EAF currents and supply currents.

Prior art US8,933,378 B2 and EP2924867B1 describe and teach an AC-DC-AC indirect converter for electric arc furnace supply via medium voltage ("MV") or primary side of the EAF transformer. The AC-DC-AC indirect converter consists of two traditional modular multilevel converters ("MMC"), one for the front-end ("FE") / main power and the other for the load / machine end. The submodules ("SM") used are either full-bridge ("FB") modules or half bridge modules. The EAF connected to the load / machine end of the indirect AC-DC-AC converter is highly dynamic with significant load current and power variation.

The back-to-back MMC-based indirect AC-DC-AC topology is effective in fast regulation and limitation of the EAF currents, improvement of arc stability and power transfer (reduced power fluctuations), and hence reduction of heating time and power consumption (efficiency increase). At the same time by maintaining a desired DC link voltage the power supply and EAF side converter is decoupled. The intermediate DC link current is a function of the total EAF active power demand. This power demand is met by the source side AC/DC converter via high quality control of three-phase balanced source currents. Only magnitude of the source current is changed in accordance to the DC current or EAF power demand change.

There is however a need for an alternative to the AC-DC-AC converter as disclosed in the prior art, that is smaller, more compact and power dense, more efficient reliable and cost effective, in particular for electric arc furnace.

### SUMMARY OF THE EMBODIMENTS

An object of the invention is an AC-DC-AC converter for delivering power to a load from a power source, the AC-DC-AC converter comprising a front-end converter, a load-end converter, and a DC link, the front-end converter being a hybrid modular multilevel rectifier, the load-end converter being either a modular multilevel converter or a hybrid modular multilevel converter.

The invention is also aimed toward different embodiments of a hybrid modular multilevel rectifier.

A first embodiment of a hybrid modular multilevel rectifier comprises at least one leg, each leg being connected to an AC connection and to the three DC connections, each leg comprises at least four diodes of a plurality of diodes and two branches, the first branch comprising at least one submodule of a plurality of submodules connected in series, the first branch being connected to a first diode anode and to a second diode cathode by a first submodule and to the AC connection, the second branch comprising at least one submodule of a plurality of submodules connected in series, the second branch being connected to the third diode anode and to the fourth diode cathode by a first submodule and to the AC connection, the first diode cathode being connected to the first DC connection, the second diode anode and the third diode cathode being connected to the second DC connection, the fourth diode anode being connected to the third DC connection.

A second embodiment of a hybrid modular multilevel rectifier comprises at least one leg, each leg being connected to an AC connection and to the three DC connections, each leg comprises at least four diodes of a plurality of diodes and two branches, each branch comprising at least one submodule of a plurality of submodules connected in series, the AC connection being connected to a first diode anode and to a second diode cathode, the first branch comprising at least one submodule of a plurality of submodules connected in series, the first branch being connected by a submodule to the first diode cathode and to a third diode anode, the second branch comprising at least one submodule of a plurality of submodules connected in series, the second branch being connected by a submodule to a second diode anode and to a fourth diode cathode, the third diode cathode being connected to the first DC connection, the first branch and the second branch being connected to the second DC connection, the fourth diode anode being connected to the third DC connection.

A third embodiment of a hybrid modular multilevel rectifier comprises at least one leg, each leg being connected to an AC connection and to the three DC connections, each leg comprises at least four diodes of a plurality of diodes and two branches, each branch comprising at least one submodules of a plurality of submodules in series, the AC connection is connected to a first diode anode and to a second diode cathode, the first branch comprises at least one submodule of a plurality of submodules connected in series, the first branch is connected by a submodule to the first DC connection and to the cathodes of the first diode and a third diode, the second branch comprises at least one submodule of a plurality of submodules connected in series, the second branch being connected by a submodule to the third DC connection and to the anodes of the second diode and a fourth diode, the third diode anode and the fourth diode cathode are connected to the second DC connection.

In a variant, each branch of a hybrid modular multilevel rectifier according to the third embodiment comprises an inductor connected between a submodule of the branch and the diode the branch is connected to.

The invention is also aimed toward different embodiments of a hybrid modular multilevel converter.

In a first embodiment, the hybrid modular multilevel converter comprises at least one leg, each leg being connected to an AC connection and to the three DC connections, each leg comprising at least four controllable switches of a plurality of controllable switches and two branches, a first end of a first controllable switch connected to a first DC connection, a first end of a second controllable switch connected to a second end of the first controllable switch, the second end of the second controllable switch connected to a second DC connection, a first end of a third controllable switch connected to a second end of the second controllable switch and to the second DC connection, a first end of a fourth controllable switch connected to a second end of the third controllable switch, a second end of the fourth controllable switch is connected to the third DC connection, the first branch comprising at least one submodule of a plurality of submodules connected in series , the first branch being connected by a first submodule to a second end of the first controllable switch and to a first end of the second controllable switch, the first branch being connected to the AC connection, the second branch comprising at least one submodule of a plurality of submodules connected in series, the second branch being connected by a first submodule to a second end of the third controllable switch and to a first end of the fourth controllable switch, the second branch being connected to the AC connection.

In a preferred mode of realization of the first embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a second embodiment, the hybrid modular multilevel converter comprises at least one leg, each leg being connected to an AC connection and to the three DC connections, each leg comprising at least two pairs of controllable switches of a plurality of pairs of controllable switches connected in series with opposite polarities, at least two controllable switches of a plurality of controllable switches connected in series, a first end of a first controllable switch of the first pair of controllable switches connected to a first DC connection, a second end of a second controllable switch of the first pair of controllable switches is connected to the second end of the first controllable switch of the first pair of controllable switches, a first end of a third controllable switch is connected to the first end of the second controllable switch of the first pair of controllable switches, the second end of the third controllable switch is connected to the AC connection, a first end of a fourth controllable switch of the second pair of controllable switches is connected to a third DC connection, a second end of a fifth controllable switch of the second pair of controllable switches is connected to a second end of the fourth controllable switch of the second pair of controllable switches, a second end of a sixth controllable switch is connected to the first end of the fifth controllable switch of the second pair of controllable switches, a first end of the sixth controllable switch is connected to the AC connection, the first branch comprising at least one submodule of a plurality of submodules connected in series, the first branch being connected by a first submodule to the first end of the second controllable switch of the first pair of controllable switches and to the first end of the third controllable switch, the first branch being connected to the second DC connection, the second branch comprising at least one submodule of a plurality of submodules connected in series, the second branch being connected by a first submodule to the first end of the fifth controllable switch of the second pair of controllable switches and to the second end of the sixth controllable switch, the second branch being connected to the second DC connection.

In a preferred mode of realization of the second embodiment, the submodules are controllable switches in a half-bridge configuration.

In a third embodiment, the hybrid modular multilevel converter comprises at least one leg, each leg being connected to an AC connection and to the three DC connections, each leg comprises at least four controllable switches of a plurality of controllable switches and two branches, a first branch comprising at least one submodule of a plurality of submodules connected in series, the first branch being connected to the first DC connection, a first submodule of the first branch being connected to a first end of a first controllable switch and to a first end of a third controllable switch, a second branch comprising at least one submodule of a plurality of submodules connected in series, the second branch being connected to the third DC connection, a first submodule of the second branch being connected to the second end of the second controllable switch and to the second end of the fourth controllable switch, the second end of the first controllable switch and the first end of the second controllable switch being connected to the second DC connection, the second end of the third controllable switch and the first end of the fourth controllable switch being connected to the AC connecti on.

In a preferred mode of realization of the third embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a variant, an inductor is included in each branch of the second and third embodiments of a hybrid modular multilevel converter and of the second embodiment of a hybrid modular multilevel rectifier, the inductor being connected between a submodule of the branch and the DC connection the branch is connected to.

In another variant, an inductor is included in each branch of the first embodiment of a hybrid modular multilevel converter and of the first embodiment of a hybrid modular multilevel rectifier, the inductor being connected between a submodule of the branch and the AC connection the branch is connected to.

Another object of the invention is an electric arc furnace apparatus comprising any of the embodiments of an AC-DC-AC converter according to the invention, connected by its load-end converter to an electric arc furnace and by its front-end converter to a power source, the apparatus further comprising at least one controller connected to the control end of each controllable switch of the AC-DC-AC converter, wherein the at least one controller commands the switching of the front-end converter and the load-end converter according to the amount of power to transmit from the power source to the electric arc furnace.

In another embodiment, a transformer is connected between either the power source and the front-end converter or between the load-end converter and the electronic arc furnace, the at least one controller commanding the front-end converter and the load-end converter so that a real and /or reactive power control is achieved.

### BRIEF DESCRIPTION OF THE DRAWINGS

The present invention will be better understood from studying the detailed description of a number of embodiments considered by way of entirely non-limiting examples and illustrated by the attached drawings in which:
- FIG. 1 illustrates a first embodiment of the invention employing a hybrid modular multilevel rectifier ("HMMR") as the front-end converter,
- FIG. 2 illustrates a first variant of a hybrid modular multilevel rectifier,
- FIG. 3 illustrates a second variant of a hybrid modular multilevel rectifier,
- FIG. 4 illustrates a third variant of a hybrid modular multilevel rectifier,
- FIG. 5 illustrates a modular multilevel converter,
- FIG. 6 illustrates a second embodiment of the invention employing a hybrid modular multilevel rectifier ("HMMR") as the front-end converter and a hybrid modular multi-level converter ("HMMC") as the load-end converter,
- FIG. 7 illustrates a first variant of a hybrid modular multilevel converter,
- FIG. 8 illustrates a second variant of a hybrid modular multilevel converter,
- FIG. 9 illustrates a third variant of a hybrid modular multilevel converter,
- FIG. 10 illustrates a full-bridge submodule with controllable switches,
- FIG. 11 illustrates a hybrid submodule with controllable switches
- FIG. 12 illustrates a half-bridge submodule with controllable switches,
- FIG. 13 illustrates a controllable switch based on a bipolar transistor,
- FIG. 14 illustrates a controllable switch based on a MOSFET transistor,
- FIG. 15 illustrates a first embodiment of a controllable switch based on a silicon-controlled rectifier ("SCR"), and
- FIG. 16 illustrates a second embodiment of a controllable switch based on SCRs.

### DETAILED DESCRIPTION

Unlike the prior art using MMCs for both the front-end and load-end converters, the invention uses a hybrid modular multilevel rectifier ("HMMR") for the front-end converter and either an MMC or a hybrid modular multilevel converter ("HMMC") for the EAF load-end converter.

Specific hybrid modular multilevel rectifier ("HMMR") variants and hybrid modular multilevel converter ("HMMC") variants are chosen to optimize performance and cost based on the DC link voltages requirement, the AC source and AC load voltages. The present invention offers power electronics converter topologies capable of running separate independent reactive power controls and shunt STATCOM operations for both the front-end and load-end converters.

Moreover, the present invention has fewer components (fewer modules / devices count), smaller size / volume, higher power density, less loss or higher efficiency, and lower cost than the prior art. The present invention also optimizes the topologies of both the front-end and the load-end converters based on values of the DC link voltages, the AC source voltage and the AC load voltage.

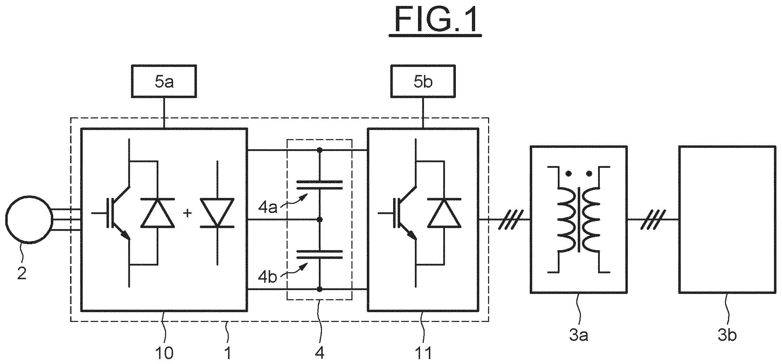

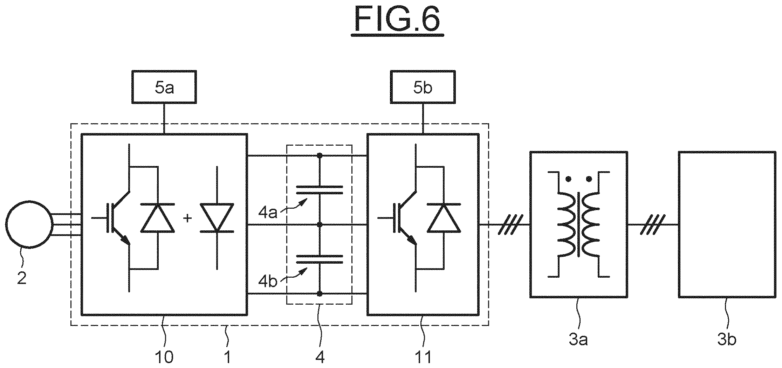

FIG. 1 and FIG. 6 illustrate different embodiments of a back-to-back AC-DC-AC power conversion system. Its operation involves the load-end converter through a transformer 3a. A similar arrangement where the front-end converter is connected to a source through a transformer is within the scope of the present invention. The load-end converter 11 or the front-end converter 10 employ controllable switches in order to direct and / or regulate power. The controllable switches can be controlled in order to modify the real and reactive power used / consumed or (re-)generated by the load (e.g., the electric arc furnace). In some embodiments, the load-end converter control and the front-end converter control are independent or decoupled. In other embodiments, the controls are directly or indirectly linked.

In a first embodiment of the invention, illustrated by FIG. 1, the AC-DC-AC converter 1 is connected to a power source 2 and to a transformer 3a. The transformer 3a isolates a load 3b (e.g., the electric arc furnace) from the AC-DC-AC converter 1. The AC-DC-AC converter 1 comprises a front-end converter 10 connected to the power source 2, a load-end converter 11 connected to the transformer 3a, and a DC link 4 connected in between the front-end converter 10 and the load-end converter 11.

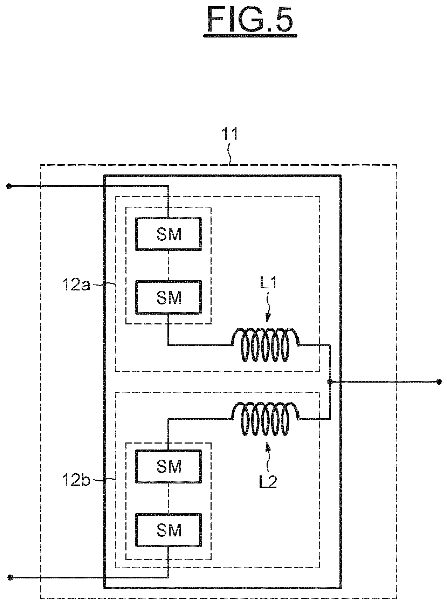

The DC link 4 comprises at least two capacitors 4a, 4b connected in series, both capacitors 4a, 4b also connected to a pair of DC connections of the front-end converter. In this embodiment, the load-end converter is an MMC, as illustrated by FIG. 5 and as described in the prior art. A first DC connection of the MMC is connected to a first connection of the first capacitor 4a, the second connection of the first capacitor 4a is connected in series to a first connection of the second capacitor 4b and the second DC connection of the MMC is connected to the second connection of the second capacitor 4b.

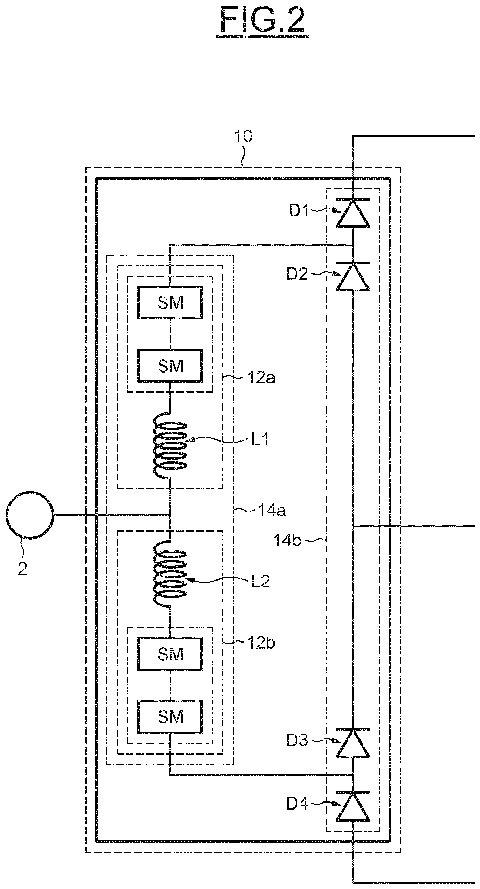

The front-end converter is one of the HMMR variants as illustrated by FIG. 2 to FIG. 4.

Since an HMMR variant comprises three DC connections, the connection of the HMMR to the DC link 4 differs from the connection of the MMC to the DC link 4. A first DC connection of the HMMR is connected to a first connection of the first capacitor 4a. A second DC connection of the HMMR is connected to both the second connection of the first capacitor 4a and to the first connection of the second capacitor 4b. The third DC connection of the HMMR is connected to the second connection of the second capacitor 4b.

The AC-DC-AC converter comprises a first controller 5a for controlling and switching the controllable switches comprised within the front-end converter 10 and a second controller 5b for controlling and switching the controllable switches comprised within the load-end converter 11. Depending on the embodiments, the first controller 5a and the second controller 5b are independent, directly or indirectly linked, or integrated within a same control unit.

The first hybrid modular multilevel rectifier variant and the second hybrid modular multilevel rectifier variant are best suited for applications where the DC link voltage is greater than the instantaneous max supply / source AC phase voltage. The third hybrid modular multilevel rectifier variant is best suited for applications where the DC link voltage is lower than the instantaneous max supply / source AC phase voltage.

The first hybrid modular multilevel rectifier ("HMMR") variant is illustrated by FIG. 2. It comprises at least a leg 10 connected to an AC connection and to the three DC connections. Each leg 10 comprises a first string 14a comprising at least one submodule SM of a plurality of submodules and two inductors L1, L2 and a second string 14b comprising at least four diodes D1, D2, D3, D4 of a plurality of diodes in series.

The first string 14a comprises two branches 12a, 12b, each branch of the first string 14a comprising an inductor L1, L2 and at least one submodule SM of a plurality of submodules in series.

The first branch 12a of the first string 14a comprises the first inductor L1 and is connected to the second string 14b by a first submodule SM and to the AC connection by the first inductor L1.

The second branch 12b of the first string 14a comprises the second inductor L2 and is connected to the second string 14b by a first submodule SM and to the AC connection by the second inductor L2.

An inductor is to be understood in the broader sense, as an element exhibiting an inductance, or an impedance with an inductance component. The inductance can be either intrinsic or parasitic.

In the second string 14b, the cathode of the first diode D1 is connected to a first DC connection.

The first diode D1 anode and the second diode D2 cathode are connected to the first string 14a, in particular to a submodule SM of the first branch 12a of the first string 14a.

The anode of the second diode D2 and the cathode of the third diode are connected to the second DC connection.

The third diode D3 anode and the fourth diode D4 cathode are connected to the first string 14a, in particular to a submodule SM of the second branch 12b of the first string 14a.

The anode of the fourth diode is connected to the third DC connection.

Other embodiments of the first hybrid modular multilevel rectifier variant comprise a different number of legs. In other words, in other embodiments, a first hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

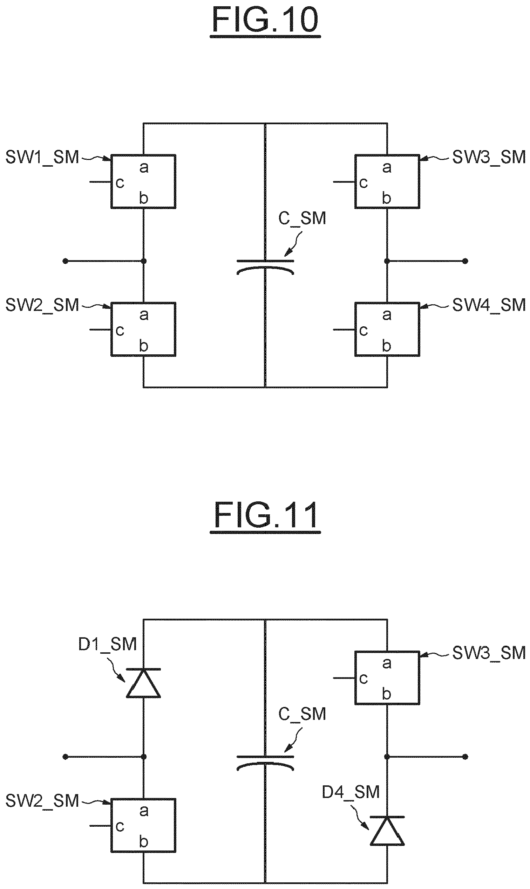

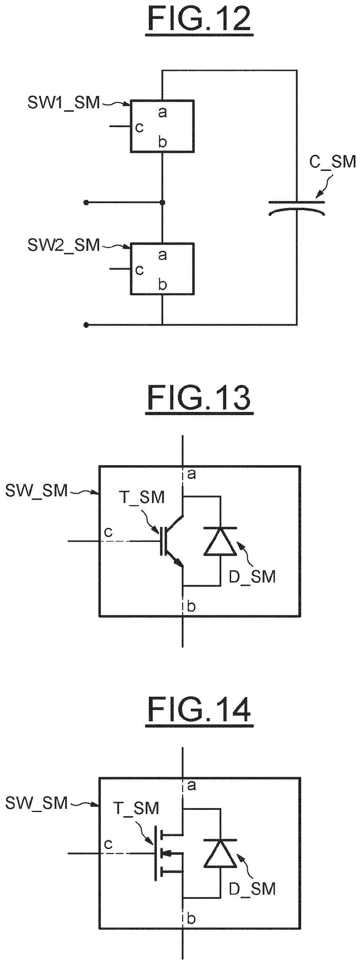

In each branch, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, full-bridge submodules and / or half-bridge submodules are used for applications where the DC link voltage is greater than the peak / maximum AC phase voltage.

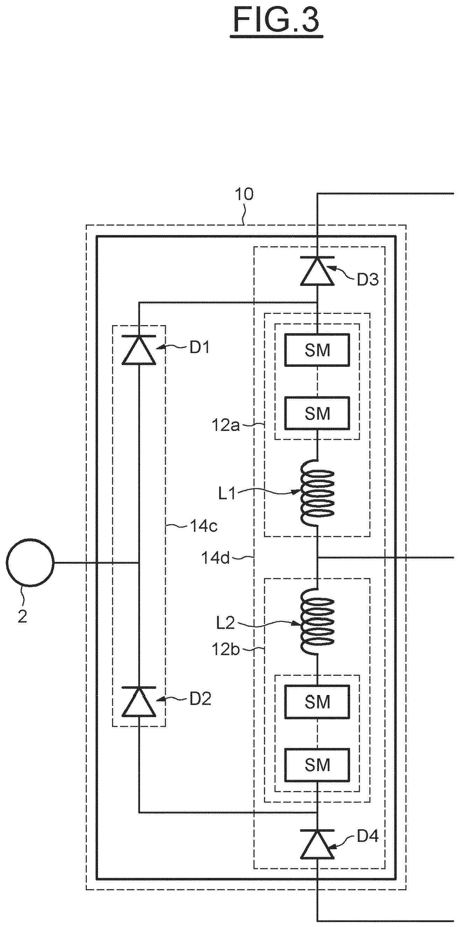

A second HMMR variant is illustrated by FIG. 3.

The second HMMR variant comprises at least one leg 10, each leg being connected to an AC connection and to the three DC connections.

Each leg 10 comprises a first string 14c comprising at least two diodes D1, D2 of a plurality of diodes in series and a second string 14d comprising at least two diodes D3, D4 of a plurality of diodes in series, at least one submodule SM of a plurality of submodules and two inductors L1, L2 one in each of the two branches 12a, 12b of the second string 14d. Each branch 12a, 12b comprises an inductor L1, L2 and at least one submodule SM in series of the second string 14d.

The first string 14c comprises at least a first diode D1 of a plurality of diodes connected in series. The first diode D1 of the first string 14c is connected by its anode to the AC connection and by its cathode to the second string 14d. The first string 14c also comprises at least a second diode D2 of a plurality of diodes connected in series. The second diode D2 of the first string 14c is connected by its cathode to the AC connection and by its anode to the second string 14d.

In the second string 14d, a first DC connection is connected to the cathode of a third diode D3 of a plurality of diodes connected in series. The anode of the third diode D3 is connected to submodule SM of the first branch 12a and to the first string 14c. More precisely, the anode of the third diode D3 is connected to the cathode of the first diode D1 of the first string 14c.

The first branch inductor L1 and the second branch inductor L2 of the second string 14d are connected together to the second DC connection.

The third DC connection is connected to the anode of the fourth diode D4 of a plurality of diodes connected in series. The cathode of the fourth diode D4 is connected to a submodule SM of the second branch 12b of the second string 14d and to the first string 14c. More precisely, the cathode of the fourth diode D4 is connected to the anode of the second diode D2 of the first string 14c.

Other embodiments of the second hybrid modular multilevel rectifier variant comprise a different number of legs. In other words, in other embodiments, a second hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, the submodules are full-bridge submodules and / or half-bridge submodules used for applications where the DC link voltage is greater than the peak / maximum AC phase voltage.

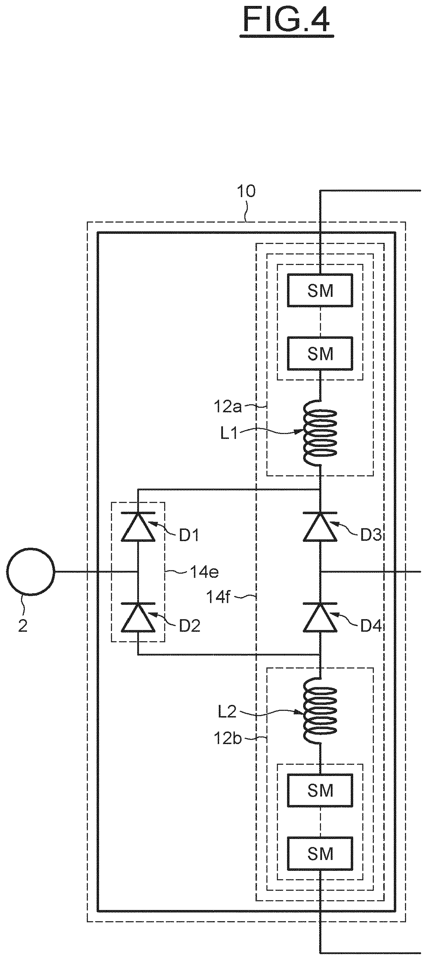

A third HMMR variant is illustrated by FIG. 4.

The third HMMR variant comprises at least one leg 10, each leg being connected to an AC connection and to the three DC connections.

Each leg comprises a first string 14e comprising at least two diodes D1, D2 of a plurality of diodes in series, and a second string 14f comprising at least two diodes D3, D4 of a plurality of diodes in series, and at least one submodule SM of a plurality of submodules in series and two inductors L1, L2 each in one of the two branches 12a, 12b of the second string 14f. Each branch 12a, 12b of the second string 14f comprises an inductor L1, L2 and at least one submodule SM in series.

In the first string 14e, the AC connection is connected to the first diode D1 anode and to the second diode D2 cathode. The first diode D1 cathode and to the second diode D2 anode are both separately connected to the second string 14f.

In the second string 14f, the first branch 12a comprising the first inductor L1 is connected by a submodule SM to the first DC connection and by the first inductor L1 to the cathode of third diode D3 and to the first string 14e. More precisely, the first inductor L1 and the cathode of third diode D3 are connected to the cathode of the first diode D1.

The second branch 12b of the second string 14f comprising the second inductor L2 is connected by a submodule SM to the third DC connection and by the second inductor L2 to the anode of fourth diode D4 of the second string 14f and to the first string 14e. More precisely, the second inductor L2 and the anode of fourth diode D4 of the second string 14f are connected to the anode of the second diode D2 of the first string 14e.

Other embodiments of the third hybrid modular multilevel rectifier variant comprise a different number of legs. In other words, in other embodiments, a third hybrid modular multilevel rectifier variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, the submodules are full-bridge submodules used for applications where the DC link voltage is less than the peak / maximum AC phase voltage.

A modular multilevel converter MCC is illustrated by FIG. 5 and comprises at least one leg 11, each leg comprising two DC side connections and one AC side connection. Each leg 11 comprises two branches 12a, 12b, both connected to the AC connection and each connected to a DC connection. Each branch 12a, 12b comprises at least one submodule SM of a plurality of submodules connected in series to an inductor L1, L2. The first branch 12a comprising a first inductor L1 is connected to the first DC connection by a submodule SM and to the AC connection through the first inductor L1. The second branch 12b comprising a second inductor L2 is connected to the second DC connection by a submodule SM and to the AC connection through the second inductor L2.

Other embodiments of the modular multilevel converter comprise a different number of legs. In other words, in other embodiments, a modular multilevel converter comprises at least two legs. The first DC connections of the two or multiple legs are connected together, and the second DC connections of the two or multiple legs are connected together. The AC connections of the two or multiple legs are independent. They form two or multiple phases of the AC connections.

The submodules used in the MMC are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

A second embodiment of an AC-DC-AC converter is illustrated by FIG. 6. The AC-DC-AC converter differs from the first embodiment by using a hybrid modular multilevel converter as the load-end converter 11. A hybrid modular multilevel rectifier is still used as the front-end converter 10. In this second embodiment, it can be noted that the DC link 4 also differs from the first embodiment DC link 4. The DC link 4 still comprises two capacitors 4a, 4b connected in series. However, since both the hybrid modular multilevel rectifier ("HMMR") and the hybrid modular multilevel converter ("HMMC") comprise three DC connections, the DC link 4 of the second embodiment comprises three DC connections to both the load-end converter 11 and to the front-end rectifier 10. The DC connections of the HMMC and the DC connections of the HMMR are connected in parallel to the pair of capacitors 4a, 4b. More precisely, a first DC connection of the HMMC and a first DC connection of the HMMR are connected to the first connection of the first capacitor 4a connected in series to the second capacitor 4b. The second DC connection of the HMMC and the second DC connection of the HMMR are connected to the second connection of the first capacitor 4a and to the first connection of the second capacitor 4b. The third DC connection of the HMMC and the third DC connection of the HMMR are connected to the second connection of the second capacitor 4b.

The AC-DC-AC converter comprises a first controller 5a for controlling and switching the controllable switches comprised within the front-end converter 10 and a second controller 5b for controlling and switching the controllable switches comprised within the load-end converter 11. Depending on the embodiments, the first controller 5a and the second controller 5b are independent, directly or indirectly linked, or integrated within a same control unit.

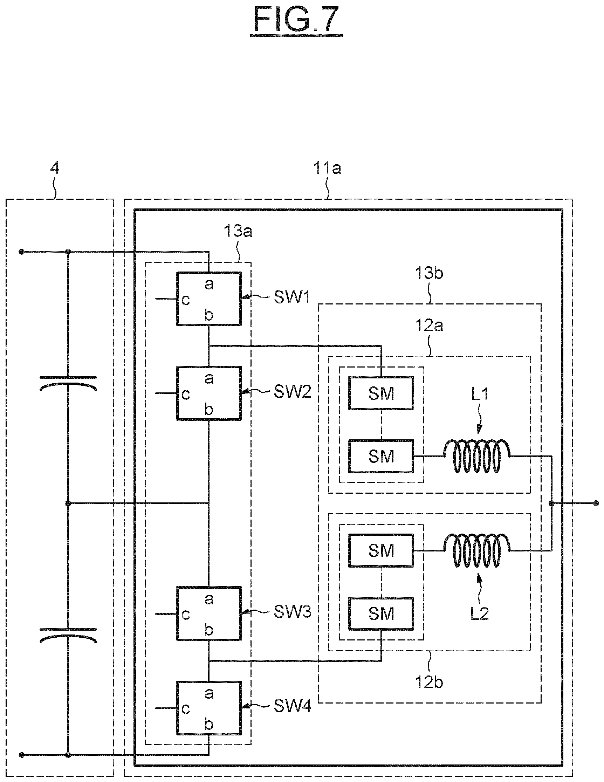

Different variants of a hybrid modular multilevel converter can be used and are illustrated by FIG. 7, FIG. 8 and FIG. 9.

A first variant of a hybrid modular multilevel converter is illustrated by FIG. 7. It comprises at least a leg 11a connected to three DC connections and to an AC connection.

Each leg comprises a first string 13a comprising at least four controllable switches SW1, SW2, SW3, SW4 of a plurality of controllable switches and a second string 13b comprising two branches 12a, 12b, each branch 12a, 12b comprising at least one submodule SM of a plurality of submodules and one inductors L1, L2 in series.

Each controllable switch SW1, SW2, SW3, SW4 of the first string 13a comprises a first end, a second end and a control end, respectively labelled a, b and c.

A first controllable switch SW1 of the first string 13a is connected by the first end to the first DC connection, and by the second end to the first end of a second controllable switch SW2 of the first string 13a and to the second string 13b.

The second end of the second controllable switch SW2 of the first string 13a is connected to both the second DC connection and the first end of a third controllable switch SW3 of the first string 13a. The second end of the third controllable switch SW3 of the first string 13a is connected to a first end of fourth controllable switch SW4 of the first string 13a and to the second string 13b.

The second end of the fourth controllable switch SW4 of the first string 13a is connected to the third DC connection.

The first branch 12a of the second string 13b is connected by a first submodule SM to the first string 13a, in particular to the second end of the first controllable switch SW1 of the first string 13a and the first end of the second controllable switch SW2 of the first string 13a.

The second branch 12b of the second string 13b is connected by a first submodule SM of the second branch 12b to the first string 13a, in particular to the second end of the third controllable switch SW3 of the first string 13a and the first end of the fourth controllable switch SW4 of the first string 13a.

The first branch 12a and the second branch 12b of the second string 13b are connected to the AC connection through their respective inductors L1, L2.

Other embodiments of the first hybrid modular multilevel converter variant comprise a different number of legs. In other words, in other embodiments, a first hybrid modular multilevel converter variant comprises at least two legs. The first DC connections of the two or multiple legs are connected together, and the second DC connections of the two or multiple legs are connected together. The AC connections of the two or multiple legs are independent. They form two or multiple phases of the AC connections.

In each branch 12a, 12b of the second string 13b, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, the submodules SM are full-bridge or hybrid full-bridge submodules for applications where the DC link voltage is less than the peak / maximum AC phase voltage; or half-bridge modules for applications where the DC link voltage is greater than the peak / maximum AC phase voltage.

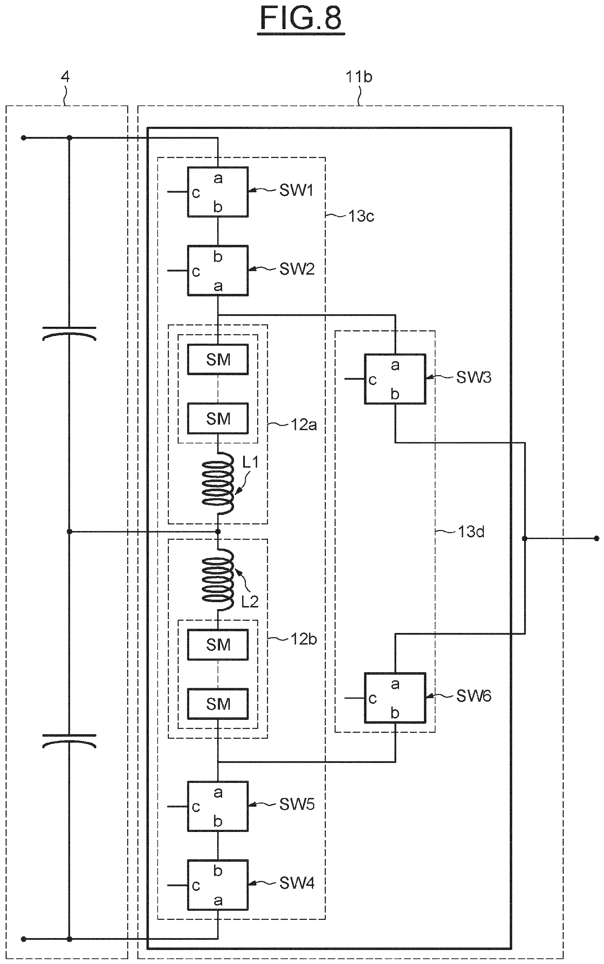

A second variant of a hybrid modular multilevel converter is illustrated by FIG. 8. It comprises at least a leg 11b connected to an AC connection, and to the three DC connections.

A leg 11b comprises a first string 13c comprising two branches 12a, 12b, each branch comprising at least one submodule SM of a plurality of submodules, at least four controllable switches SW1, SW2, SW4 and SW5 of a plurality of controllable switches connected in series, and an inductor L1, L2 in series, and a second string 13d comprising at least two controllable switches SW3, SW6 of a plurality of controllable switches in connected series.

Each controllable switch SW1, SW2, SW3, SW4, SW5, SW6 comprises a first end, a second end and a control end, respectively labelled a, b and c.

In the first string 13c, the first end of the first controllable switch SW1 is connected to a first DC connection. The second end of the first controllable switch SW1 is connected to the second end of a second controllable switch SW2.

The first end of the second controllable switch SW2 of the first string 13c is connected to a first submodule SM of the first branch 12a of the first string 13c and to the second string 13d.

The first end of a fourth controllable switch SW4 of the first string 13c is connected to a third DC connection. The second end of the fourth controllable switch SW4 of the first string 13c is connected to the second end of a fifth controllable switch SW5 of the first string 13c. The first end of the fifth controllable switch SW5 of the first string 13c is connected to a first submodule SM of the second branch 12b of the first string 13c and to the second string 13b.

The inductor L1 of the first branch 12a and the inductor L2 of the second branch 12b of the first string 13c are connected together to the second DC connection.

In the second string 13d, the first end of the third controllable switch SW3 is connected to the first string 13c, in particular to the first end of the second controllable switch SW2 and to the first submodule SM of the first branch 12a.

The second end of the sixth controllable switch SW6 of the second string 13d is connected to the first string 13c, in particular to the first end of the fifth controllable switch SW5 of the first string 13c and to the first submodule SM of the second branch 12b of the first string 13c.

The second end of the third controllable switch SW3 of the second string 13d and the first end of the third controllable switch SW6 of the second string 13d are connected together to the AC connection.

Other embodiments of the second hybrid modular multilevel converter variant comprise a different number of legs. In other words, in other embodiments, a second hybrid modular multilevel converter variant comprises at least two legs. The first DC connections of the two or multiple legs are connected together, and the second DC connections of the two or multiple legs are connected together. The AC connections of the two or multiple legs are independent. They form two or multiple phases of the AC connections.

In each branch 12a, 12b of the first string 13c, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, the submodules SM are half-bridge submodules for applications where the DC link voltage is less than the peak / maximum AC phase voltage.

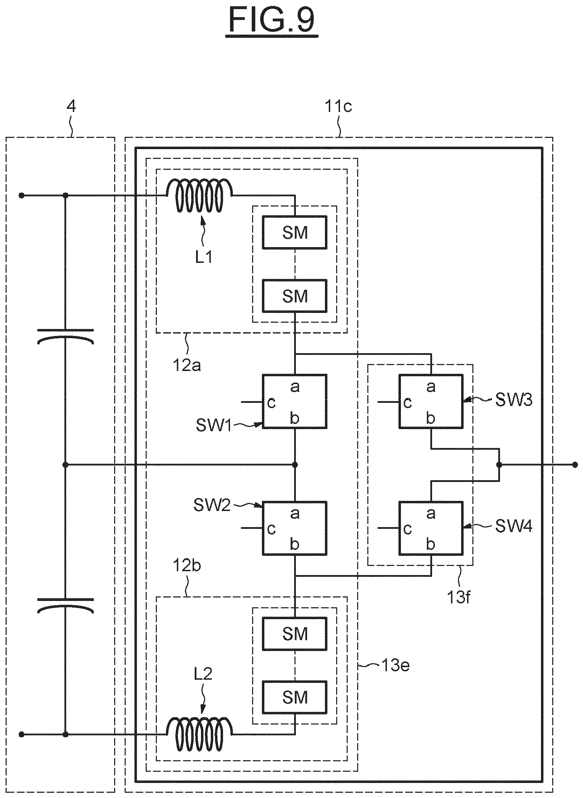

A third variant of a hybrid modular multilevel converter is illustrated by FIG. 9. It comprises at least a leg 11c connected to an AC connection to the three DC connections.

The leg 11c comprises a first string 13e comprising two branches 12a, 12b, each connected to at least two controllable switches SW1, SW2 of a plurality of controllable switches connected in series, and a second string 13f comprising at two controllable switches SW3, SW4 of a plurality of controllable switches connected in series. Each branch 12a, 12b the first string 13e comprises at least one submodule SM of a plurality of submodules and an inductor L1, L2 connected in series.

In the first string 13e, the first branch 12a is connected to the first DC connection by the first inductor L1. The first branch 12a is connected by a first submodule SM to the first end of a first controllable switch SW1 and to the second string 13f.

Also in the first string 13e, the second branch 12b is connected to the third DC connection by the second inductor L2. The second branch 12b is connected by a first submodule SM to the second end of a second controllable switch SW2 and to the second string 13f.

Still in the first string 13e, the second end of the first controllable switch SW1 is connected to the first end of the second controllable switch SW2 and to the second DC connection.

The second string 13f comprises two controllable switches SW3, SW4. The first end of the third controllable switch SW3 of the second string 13f is connected to the first string 13e, in particular to the first end of first controllable switch SW1 and to the first submodule of the first branch 12a of the first string 13e.

The second end of the fourth controllable switch SW4 of the second string 13f is connected to the first string 13e, in particular to the second end of second controllable switch SW2 and to the first submodule of the second branch 12b of the second string 13f.

The second end of the third controllable switch SW3 of the second string 13f and the first end of the fourth controllable switch SW4 of the second string 13f are connected to the AC connection.

Other embodiments of the third hybrid modular multilevel converter variant comprise a different number of legs. In other words, in other embodiments, a third hybrid modular multilevel converter variant comprises at least two legs. The first DC connections of the two or multiple legs are connected together, and the second DC connections of the two or multiple legs are connected together. The AC connections of the two or multiple legs are independent. They form two or multiple phases of the AC connections.

In either branch 12a, 12b of the first string 13e, the submodules SM are full-bridge submodules (as illustrated in FIG. 10), hybrid full-bridge submodules (as illustrated in FIG. 11) or half-bridge submodules (as illustrated in FIG. 12) or any combination thereof.

In a preferred embodiment, the submodules SM are full-bridge or hybrid full-bridge submodules for applications where the DC link voltage is less than the peak / maximum AC phase voltage; or half-bridge modules for applications where the DC link voltage is greater than the peak / maximum AC phase voltage.

The different variants of submodules SM will now be described.

A first submodule variant is built upon controllable switches in a full bridge configuration as illustrated in FIG. 10. It comprises two connections, controllable switches SW1_SM, SW2_SM, SW3_SM, SW4_SM, and a capacitor C_SM.

Each controllable switch SW1_SM, SW2_SM, SW3_SM, SW4_SM comprises a first end, a second end, and a control end, respectively labelled a, b and c.

A first submodule connection is connected to the second end of a first controllable switch SW1 SM and to the first end of a second controllable switch SW2_SM.

A second connection is connected to the second end of the third controllable switch SW3_SM and to the first end of the fourth controllable switch SW4_SM.

A first end of the capacitor C_SM is connected to both first ends of the first controllable switch SW1_SM and third controllable switch SW3_SM. A second end of the capacitor C_SM is connected both second ends of the second controllable switch SW2_SM and fourth controllable switch SW4_SM.

In a second variant, the submodules SM are hybrid submodules based on controllable switches in a full bridge configuration with diodes, as illustrated in FIG. 11 instead of a regular four controllable switches in a full bridge configuration.

A hybrid submodule essentially corresponds to a regular submodule wherein the first and fourth controllable switches SW1_SM, SW4_SM are replaced by diodes D1_SM, D4_SM. For the sake of comprehensiveness, FIG. 10 naming scheme is kept.

A hybrid submodule comprises two connections, two controllable switches SW2_SM, SW3_SM, two diodes D1_SM, D4_SM and a capacitor C_SM.

A first connection is connected to the first diode D1_SM anode and to a first end of the second controllable switches SW2_SM.

A second connection is connected to the second end of the third controllable switch SW3_SM and to the fourth diode D4_SM cathode.

A first end of the capacitor C_SM is connected on one hand to the first diode D1_SM cathode and to the first end of the third controllable switch SW3_SM. A second end of the capacitor C_SM is connected on another hand to the second end of the second controllable switch SW2_SM and to the fourth diode D4_SM anode.

In a third variant, the submodules SM are controllable switches in a half bridge configuration as illustrated in FIG. 12. It comprises two connections, two controllable switches SW1_SM, SW2_SM and a capacitor C_SM.

The first connection is connected to the second end of the first controllable switch SW1_SM and to the first end of the second controllable switch SW2_SM. The second connection is connected to the second end of the second controllable switch SW2_SM.

A first end of the capacitor C_SM is connected to the first end of the first controllable switch SW1_SM. A second end of the capacitor C_SM is connected to both the second connection and the second end of the second controllable switch SW2_SM.

FIG. 13 illustrates an exemplary embodiment of a controllable switch. The controllable switch, labelled SW_SM, can be any of the controllable switches SW1, SW2, SW3, SW4, SW5, SW6 SW1_SM, SW2_SM, SW3_SM or SW4_SM comprised in the embodiments described above.

The controllable switch SW _SM comprises a first end, a second end, and a control end, respectively labelled a, b and c. The first end is connected to the collector / source of a bipolar transistor T_SM, the second end being connected to the emitter / drain of said bipolar transistor T_SM. A freewheeling diode D_SM is connected so that its anode is connected to the transistor T_SM drain, its cathode being connected to the transistor T_SM source. The control end is connected to the transistor T_SM gate.

Other embodiments of the controllable switch SW_SM comprise at least two transistors connected in parallel, in series or in a combination or parallel and series.

The transistor T_SM illustrated in FIG. 13 is a bipolar transistor. However, other kinds of transistors can be used, like for example MOSFETs ("Metal Oxide Silicon Field Effect Transistors") as pictured in FIG. 14, or IEGTs ("Injection Enhanced Gate Transistors").

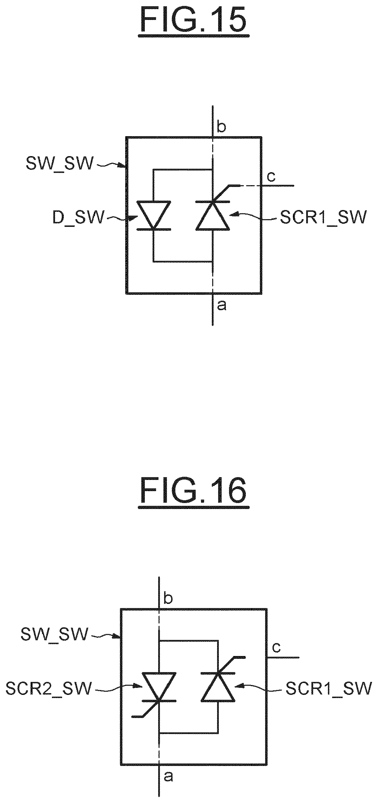

FIG. 15 and FIG. 16 illustrate yet other exemplary embodiments of a controllable switch. The controllable switch, labelled SW_SW, can be any of the controllable switches SW1, SW2, SW3, SW4, SW5, SW6 comprised in the embodiments described above.

The controllable switches SW_SW shown in FIG. 15 and FIG 16 includes a SCR ("Silicon-Controlled Rectifier") connected to an antiparallel freewheeling diode.

FIG. 15 illustrates a first embodiment of an SCR-based controllable switch SW_SW comprising a silicon-controlled rectifier labelled SCR1_SW and a freewheeling diode D_SW. The first end of the SCR-based controllable switch SW_SW is connected to the anode of the silicon-controlled rectifier SCR1_SW and to the cathode of the freewheeling diode D_SW. The second end of the SCR-based controllable switch SW_SW is connected to the cathode of the SCR SCR1_SW and to the anode of the freewheeling diode D_SW. The control end of the SCR-based controllable switch SW_SW is connected to the gate of the silicon-controlled rectifier SCR1_SW.

FIG. 16 illustrates a second embodiment of an SCR-based controllable switch SW_SW comprising two silicon-controlled rectifiers labelled SCR1_SW and SCR2_SW.

A first end of the SCR-based controllable switch SW_SW is connected to the anode of the first silicon-controlled rectifier SCR1_SW and to the cathode of the second silicon-controlled rectifier SCR2_SW.

The second end of the SCR-based controllable switch SW_SW is connected to the cathode of the first silicon-controlled rectifier SCR1_SW and to the anode of the second silicon-controlled rectifier SCR2_SW.

The control end of the SCR-based controllable switch SW_SW is connected directly or indirectly to the gates of both silicon-controlled rectifier SCR1_SW, SCR2_SW. For instance, one of the silicon-controlled rectifiers can be connected directly while the other is connected through signal processing means. Such signal processing means can be configured to delay a signal by a duration, either a fixed duration or a variable duration, or to trigger the emission of a pulsed width modulated signal upon receiving a command signal. The signal processing means can be configured to generate a command signal based on a multiplexed signal received. Other signal processing means can be used without departing from the scope of the invention.

## Claims

1. An AC-DC-AC converter for delivering power to a load from a power source, the AC-DC-AC converter comprising a front-end converter (10), a load-end converter (11), and a DC link (4), the front-end converter (10) being a hybrid modular multilevel rectifier, the load-end converter (11) being either a modular multilevel converter or a hybrid modular multilevel converter.

2. The AC-DC-AC converter according to claim 1, wherein the hybrid modular multilevel rectifier comprises at least one leg, each leg being connected to an AC connection and to the three DC connections, each leg comprises at least four diodes (D1, D2, D3, D4) of a plurality of diodes and two branches (12a, 12b), the first branch (12a) comprising at least one submodule (SM) of a plurality of submodules connected in series, the first branch (12a) being connected to a first diode (D1) anode and to a second diode (D2) cathode by a first submodule (SM) and to the AC connection, the second branch (12b) comprising at least one submodule (SM) of a plurality of submodules connected in series, the second branch (12b) being connected to the third diode (D3) anode and to the fourth diode (D4) cathode by a first submodule (SM) and to the AC connection, the first diode (D1) cathode being connected to the first DC connection, the second diode (D2) anode and the third diode (D3) cathode being connected to the second DC connection, the fourth diode (D4) anode being connected to the third DC connection.

3. The AC-DC-AC converter according to claim 1, wherein the hybrid modular multilevel rectifier comprises at least one leg, each leg being connected to an AC connection and to the three DC connections, each leg comprises at least four diodes (D1, D2, D3, D4) of a plurality of diodes and two branches (12a, 12b), each branch (12a, 12b) comprising at least one submodule (SM) of a plurality of submodules connected in series, the AC connection being connected to a first diode (D1) anode and to a second diode (D2) cathode, the first branch (12a) comprising at least one submodule (SM) of a plurality of submodules connected in series, the first branch (12a) being connected by a submodule (SM) to the first diode (D1) cathode and to a third diode (D3) anode, the second branch (12b) comprising at least one submodule (SM) of a plurality of submodules connected in series, the second branch (12b) being connected by a submodule (SM) to a second diode (D2) anode and to a fourth diode (D4) cathode, the third diode (D3) cathode being connected to the first DC connection, the first branch (12a) and the second branch (12b) being connected to the second DC connection, the fourth diode (D4) anode being connected to the third DC connection.

4. The AC-DC-AC converter according to claim 1, wherein the hybrid modular multilevel rectifier comprises at least one leg, each leg being connected to an AC connection and to the three DC connections, each leg comprises at least four diodes (D1, D2, D3, D4) of a plurality of diodes and two branches (12a, 12b), each branch (12a, 12b) comprising at least one submodules (SM) of a plurality of submodules in series, the AC connection is connected to a first diode (D1) anode and to a second diode (D2) cathode, the first branch (12a) comprises at least one submodule (SM) of a plurality of submodules connected in series, the first branch (12a) is connected by a submodule (SM) to the first DC connection and to the cathodes of the first diode (D1) and a third diode (D3), the second branch (12b) comprises at least one submodule (SM) of a plurality of submodules connected in series, the second branch (12b) being connected by a submodule (SM) to the third DC connection and to the anodes of the second diode (D2) and a fourth diode (D4), the third diode (D3) anode and the fourth diode (D4) cathode are connected to the second DC connection.

5. The AC-DC-AC converter according to claim 4, wherein each branch (12a, 12b) comprises an inductor (L1, L2) connected between a submodule (SM) of the branch (12a, 12b) and the diodes (D3, D4) the branch (12a, 12b) is connected to.

6. The AC-DC-AC converter according to any of claims 1 to 5, wherein the hybrid modular multilevel converter comprises at least one leg, each leg being connected to an AC connection and to the three DC connections, each leg comprising at least four controllable switches (SW1, SW2, SW3, SW4) of a plurality of controllable switches connected in series and two branches (12a, 12b), a first end of a first controllable switch (SW1) connected to a first DC connection, a first end of a second controllable switch (SW2) connected to a second end of the first controllable switch (SW1), the second end of the second controllable switch (SW2) connected to a second DC connection, a first end of a third controllable switch (SW3) connected to a second end of the second controllable switch (SW2) and to the second DC connection, a first end of a fourth controllable switch (SW4) connected to a second end of the third controllable switch (SW3), a second end of the fourth controllable switch (SW4) is connected to the third DC connection, the first branch (12a) comprising at least one submodule (SM) of a plurality of submodules connected in series, the first branch (12a) being connected by a first submodule (SM) to a second end of the first controllable switch (SW1) and to a first end of the second controllable switch (SW2), the first branch (12a) being connected to the AC connection, the second branch (12b) comprising at least one submodule (SM) a plurality of submodules connected in series, the second branch (12b) being connected by a first submodule (SM) to a second end of the third controllable switch (SW3) and to a first end of the fourth controllable switch (SW4), the second branch (12b) being connected to the AC connection.

7. The AC-DC-AC converter according to any of claims 1 to 5, wherein the hybrid modular multilevel converter comprises at least one leg, each leg being connected to an AC connection and to the three DC connections, each leg comprising at least two pairs of controllable switches (SW1, SW2, SW4, SW5) of a plurality of pairs of controllable switches connected in series with opposite polarities and at least two controllable switches (SW3, SW6) of a plurality of controllable switches connected in series, a first end of a first controllable switch (SW1) of the first pair of controllable switches (SW1, SW2) connected to a first DC connection, a second end of a second controllable switch (SW2) of the first pair of controllable switches (SW1, SW2) is connected to the second end of the first controllable switch (SW1) of the first pair of controllable switches (SW1, SW2), a first end of a third controllable switch (SW3) is connected to the first end of the second controllable switch (SW2) of the first pair of controllable switches (SW1, SW2), the second end of the third controllable switch (SW3) is connected to the AC connection, a first end of a fourth controllable switch (SW4) of the second pair of controllable switches (SW4, SW5) is connected to a third DC connection, a second end of a fifth controllable switch (SW5) of the second pair of controllable switches (SW4, SW5) is connected to a second end of the fourth controllable switch (SW4) of the second pair of controllable switches (SW4, SW5), a second end of a sixth controllable switch (SW6) is connected to the first end of the fifth controllable switch (SW5) of the second pair of controllable switches (SW4, SW5), a first end of the sixth controllable switch (SW6) is connected to the AC connection, the first branch (12a) comprising at least one submodule (SM) of a plurality of submodules connected in series, the first branch (12a) being connected by a first submodule (SM) to the first end of the second controllable switch (SW2) of the first pair of controllable switches (SW1, SW2) and to the first end of the third controllable switch (SW3), the first branch (12a) being connected to the second DC connection, the second branch (12b) comprising at least one submodule (SM) of a plurality of submodules, the second branch (12b) being connected by a first submodule (SM) to the first end of the fifth controllable switch (SW5) of the second pair of controllable switches (SW4, SW5) and to the second end of the sixth controllable switch (SW6), the second branch (12b) being connected to the second DC connection.

8. The AC-DC-AC converter according to any of claims 1 to 5, wherein the hybrid modular multilevel converter comprises at least one leg, each leg being connected to an AC connection and to the three DC connections, each leg comprises at least four controllable switches (SW1, SW2, SW3, SW4) of a plurality of switches connected in series and two branches (12a, 12b), a first branch (12a) comprising at least one submodule (SM) of a plurality of submodules connected in series, the first branch (12a) being connected to the first DC connection, a first submodule (SM) of the first branch (12a) being connected to a first end of a first controllable switch (SW1) and to a first end of a third controllable switch (SW3), a second branch (12b) comprising at least one submodule (SM) of a plurality of submodules connected in series, the second branch (12b) being connected to the third DC connection, a first submodule (SM) of the second branch (12b) being connected to the second end of the second controllable switch (SW2) and to the second end of the fourth controllable switch (SW4) , the second end of the first controllable switch (SW1) and the first end of the second controllable switch (SW2) being connected to the second DC connection, the second end of the third controllable switch (SW3) and the first end of the fourth controllable switch (SW4) being connected to the AC connection.

9. The AC-DC-AC converter according to any of claims 3, 7 or 8, wherein each branch (12a, 12b) comprises an inductor (L1, L2) connected between a submodule (SM) of the branch (12a, 12b) and the DC connection the branch (12a, 12b) is connected to.

10. The AC-DC-AC converter according to any of claims 2 or 6, wherein each branch (12a, 12b) comprises an inductor (L1, L2) connected between a submodule (SM) of the branch (12a, 12b) and the AC connection the branch is connected to.

11. The AC-DC-AC converter according to claim 7, wherein all the submodules are half-bridge submodules.

12. The AC-DC-AC converter according to either claims 6 or 8, wherein all the submodules are full-bridge submodules or hybrid full-bridge submodules.

13. The AC-DC-AC converter according to either claims 2 or 3, wherein all the submodules are half-bridge submodules and/or full-bridge submodules.

14. The AC-DC-AC converter according to claim 4, wherein all the submodules are full-bridge submodules.

15. The AC-DC-AC converter according to any of claims 2 to 8, wherein a submodule is a half-bridge submodule, a full-bridge submodule or a hybrid full-bridge submodule.

16. The AC-DC-AC converter according to any of claims 11, 13 or 15, wherein an half-bridge submodule comprises a first connection connected to a second end of a first controllable switch (SW1_SM) and to a first end of a second controllable switch (SW2_SM), a second connection connected to the second end of the second controllable switch (SW2_SM), a capacitor (C_SM) connected on one hand to the first end of the first controllable switch (SW1_SM) and on another hand to both the second connection and the second end of the second controllable switch (SW2_SM).

17. The AC-DC-AC converter according to any of claims 12 to 15, wherein a full-bridge submodule comprises a first connection connected to a second end of a first controllable switch (SW1_SM) and to a first end of a second controllable switch (SW2_SM), a second connection is connected to a second end of a third controllable switch (SW3_SM) and to a first end of a fourth controllable switch (SW4_SM), a capacitor (C_SM) being connected on one hand to both first ends of the first controllable switch (SW1_SM) and third controllable switch (SW3_SM), and on another hand to both second ends of the second controllable switch (SW2_SM) and fourth controllable switch (SW4_SM)

18. The AC-DC-AC converter according to any of claims 12 or 15, wherein a hybrid full-bridge submodule comprises a first connection connected to the first diode (D1_SM) anode and to a first end of a second controllable switch (SW2_SM), a second connection connected to a second end of the third controllable switch (SW3_SM) and to the fourth diode (D4_SM) cathode, a capacitor (C_SM) connected on one hand to the first diode (D1_SM) cathode and to the first end of the third controllable switch (SW3_SM), and on another hand to the second end of the second controllable switch (SW2_SM) and to the fourth diode (D4_SM) anode.

19. The AC-DC-AC converter according to any of claims 6 to 18, wherein a controllable switch comprises at least a transistor and a freewheeling diode, the transistor source and the freewheeling diode cathode being connected to the first end of the controllable switch (SW_SM), the transistor drain and the freewheeling diode anode being connected to the second end of the controllable switch (SW_SM), the transistor gate being connected to the control end of the controllable switch (SW_SM).

20. The AC-DC-AC converter according to claim 19, wherein a transistor is an insulated-gate bipolar transistor, an injection-enhanced gate transistor, notably Si-based or a metal-oxide-semiconductor field-effect transistors, notably SiC-based.

21. The AC-DC-AC converter according to claims 6 to 8, wherein the controllable switch (SW_SW) includes a silicon-controlled rectifier (SCR1_SW) and an antiparallel freewheeling diode (D_SW) or the controllable switch (SW_SW) includes a silicon-controlled rectifier (SCR1_SW) and an antiparallel silicon-controlled rectifier (SCR2_SW).

22. An Electric arc furnace apparatus comprising an AC-DC-AC converter according to either claims 1 to 21, connected by its load-end converter (11) to an electric arc furnace (3b) and by its front-end converter (10) to a power source (2), the apparatus further comprising at least one controller (5a, 5b) connected to the control end of each controllable switch of the AC-DC-AC converter, wherein the at least one controller (5a, 5b) commands the switching of the front-end converter (10) and the load-end converter (11) according to the amount of power to transmit from the power source (2) to the electric arc furnace (3b).

23. The Electric arc furnace apparatus according to claim 22, wherein a transformer (3a) is connected between either the power source (2) and the front-end converter (10) or between the load-end converter (11) and the electronic arc furnace (3b), the at least one controller (5a, 5b) commands the front-end converter (10) and the load-end converter (11) so that a real and / or reactive power control is achieved.
